(19) Europäisches Patentamt
European Patent Office
Office européen des brevets

(11) EP 3 251 841 B1

(12) EUROPÄISCHE PATENTSCHRIFT

(45) Veröffentlichungstag und Bekanntmachung des Hinweises auf die Patenterteilung:
**10.07.2019 Patentblatt 2019/28**

(51) Int Cl.:
***B32B 27/08*** $^{(2006.01)}$ ***B32B 27/36*** $^{(2006.01)}$

(21) Anmeldenummer: **17172410.7**

(22) Anmeldetag: **23.05.2017**

(54) **BIAXIAL ORIENTIERTE, UV-STABILISIERTE, EIN- ODER MEHRSCHICHTIGE POLYESTERFOLIE MIT MINDESTENS EINSEITIGER ANTIREFLEX-BESCHICHTUNG (ANTIGLARE) UND EINER TRANSPARENZ VON MINDESTENS 93,5%**

BIAXIALLY ORIENTED, UV-STABILIZED, SINGLE OR MULTI-LAYER POLYESTER FILM WITH AT LEAST ONE-SIDED ANTIREFLECTION COATING (ANTIGLARE) AND A TRANSPARENCY OF AT LEAST 93.5%

FEUILLE POLYESTER MULTICOUCHES OU MONOCOUCHE, STABILISÉE AUX UV ET À ORIENTATION BIAXIALE COMPRENANT UNE COUCHE ANTI-REFLET D'UN CÔTÉ (ANTIREFLET) ET D'UNE COUCHE TRANSPARENTE D'AU MOINS 93,5 %

(84) Benannte Vertragsstaaten:
**BE DE FR GB IT LU NL PL SE**

(30) Priorität: **30.05.2016 DE 102016209294**

(43) Veröffentlichungstag der Anmeldung:
**06.12.2017 Patentblatt 2017/49**

(73) Patentinhaber: **Mitsubishi Polyester Film GmbH**
**65203 Wiesbaden (DE)**

(72) Erfinder:
- **Kliesch, Holger**
  **65462 Ginsheim (DE)**
- **Bork, Andreas**
  **67593 Westhofen (DE)**
- **Lohre, Claudia**
  **65185 Wiesbaden (DE)**
- **Fischer, Ingo**
  **65558 Heistenbach (DE)**
- **Ünker, Yavuz**
  **55268 Nieder-Olm (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**EP-A1- 2 060 392** **EP-A2- 0 144 948**
**DE-A1- 10 043 785**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 251 841 B1

## Beschreibung

## Zusammenfassung

Die vorliegende Erfindung betrifft eine hochtransparente, biaxial orientierte, UVstabile Polyesterfolie welche mindestens einseitig mit einer Beschichtung ausgestattet ist, die die Reflektion von sichtbarem Licht reduziert. Die erfindungsgemäße Folie eignet sich zur Herstellung von Gewächshausenergiesparmatten, insbesondere für die Kultur von Pflanzen mit hohem Lichtanspruch wie z.B. Tomaten. Die Folie weist spezielle Transparenzeigenschaften und eine hohe UV-Stabilität auf. Die Erfindung betrifft ferner ein Verfahren zur Herstellung der Polyesterfolie sowie ihre Verwendung in Gewächshäusern.

## Beschreibung

Folien für Energiesparmatten in Gewächshäusern müssen eine Reihe von Anforderungen erfüllen. Zum einen soll der für das Pflanzenwachstum benötigte Teil des Lichtes durch die Folie/ Gewächshausenergiesparmatten hindurchgehen und in der Nacht und insbesondere in den Morgenstunden soll die Gewächshausenergiesparmatten zudem die vom Boden aufsteigende Wärme sowohl durch Konvektionsbremse, als auch durch Reflektion und Rückstrahlung im Gewächshaus halten. Ohne die Gewächshausenergiesparmatte steigt der Energieverbrauch im Gewächshaus an und die Einstellung des idealen Klimas wird erschwert. Nachteil der Matten ist aber generell die zusätzliche Schicht im Strahlengang der Sonne, die sowohl durch Absorption, als auch durch Reflektion die zur Verfügung stehende Lichtmenge reduziert. Um die Mittagszeit kann die Energiesparmatte aufgezogen werden, oder durch zu hohen Lichteinfall kann sogar der Einsatz von Energiesparmatten zur Kühlung notwendig werden. In den Morgenstunden, ist die Energiesparmatte aber von besonderer Bedeutung, da hier die für das Pflanzenwachstum notwendige Temperatur erreicht werden muss und gleichzeitig so viel Licht wie möglich zur Verfügung gestellt werden muss, um eine hohe Photosyntheseaktivität zu gewährleisten. Insbesondere in den Morgenstunden, steht die Sonne aber noch in einem niedrigen Winkel am Horizont, was an einer Folienoberfläche zu noch höherer Reflektion führt, als bei höherem Sonnenstand. Insbesondere zum Haupteinsatzzeitpunkt der Matten muss die Reflektion also reduziert werden.

Die Folie muss zudem eine UV-Stabilität aufweisen, die es ermöglicht die Energiesparmatte mindestens 5 Jahre in einem Gewächshaus im Einsatz zu lassen, ohne dabei signifikant zu vergilben oder Versprödungen oder Rissbildungen an der Oberfläche zu zeigen oder in den mechanischen Eigenschaften gravierend nachzulassen, oder deutlich an Transparenz zu verlieren.

In der EP 2 060 392 A1 werden antimikrobiell ausgerüstete Polyesterfolien beschrieben, die auch mit Acrylaten beschichtet sein können, wobei Beschichtungsdicken von unter 1 µm, bevorzugt unter 500 nm und besonders bevorzugt unter 350 nm offenbart sind.

Die DE 100 43 785 A1 beschreibt die Herstellung einer bibenzolmodifizierten Polyesterfolie, wobei erwähnt wird, dass eine Beschichtung der Folie eine zusätzliche Funktionalität verleihen kann, wie "siegelfähig, bedruckbar, metallisierbar, sterilisierbar, antistatisch" etc. Die Beschichtungsdicken werden mit 5 bis 100 nm, insbesondere 20 bis 70 nm, insbesondere 30 bis 50 nm angegeben.

Die Aufgabe der vorliegenden Erfindung bestand darin, eine biaxial orientierte Polyesterfolie herzustellen, die sich durch eine hohe Transparenz von mindestens 93,5 % auszeichnet. Insbesondere soll die Folie bei mehrjähriger Außenanwendung nicht signifikant vergilben, keine Versprödung oder Rissbildung der Oberfläche zeigen und auch keine für die Anwendung kritische Verschlechterung der mechanischen und optischen Eigenschaften aufweisen. Die Folie soll sich im Dickenbereich von 10 bis 40 µm zudem wirtschaftlich auf existierenden Polyesterfolien Ein- oder Mehrschichtanlagen herstellen lassen.

Gelöst wird diese Aufgabe durch eine ein- oder mehrschichtige Polyesterfolie, die eine Transparenz von mindestens 93,5 % aufweist, wobei:

- die Folie (ohne Berücksichtigung der Beschichtung) in allen Schichten einen UV-Stabilisator enthält,
- die Folie mindestens einseitig mit einer Antireflexbeschichtung ausgestattet ist,
- und die gegenüberliegende Folienseite ebenfalls eine Antireflex-Modifikation aufweist, die, entweder ebenfalls eine Antireflexbeschichtung ist, oder eine Deckschichtmodifikation mit niedrigerem Brechungsindex als Polyethylenterephthalat aufweist.

Die Gesamtfoliendicke beträgt mind. 10 µm und maximal 40 µm. Bevorzugt liegt die Foliendicke bei mindestens 14 und maximal 23 µm und idealerweise bei mindestens 14,5 µm und maximal 20 µm. Liegt die Foliendicke unter 10 µm, so reicht die mechanische Festigkeit der Folie nicht mehr aus, um die in der Anwendung in der Energiesparmatte auftretenden Züge ohne Verdehnungen aufzunehmen. Oberhalb von 40 µm wird die Folie zu steif und im geöffneten, aufgezogenen Zustand entsteht ein zu großer "Folienballen" mit entsprechender zu großer Abschattung.

Die Folie weist eine Basisschicht B auf. Einschichtige Folien bestehen nur aus dieser Basisschicht. Bei einer mehrschichtigen Ausführungsform besteht die Folie aus der (d.h. einer) Basisschicht und mindestens einer weiteren Schicht, die je nach Positionierung in der Folie als Zwischenschicht (mindestens jeweils eine weitere Schicht befindet sich dann auf jeder der beiden Oberflächen) oder Deckschicht (die Schicht bildet eine Außenschicht der Folie) bezeichnet wird. Bei der mehrschichtigen Ausführung ist die Dicke der Basisschicht mindestens genauso groß wie die Summe der übrigen Schichtdicken. Bevorzugt liegt die Dicke der Basisschicht bei mindestens 55 % der Gesamtfoliendicke und idealerweise bei mindestens 63 % der Gesamtfoliendicke. Die Dicke der übrigen Schichten, bevorzugt der Deckschichten beträgt mindestens 0,5 μm, bevorzugt mindestens 0,6 μm und idealerweise mindestens 0,7 μm. Die Dicke der Deckschichten beträgt maximal 3 μm und bevorzugt maximal 2,5 μm und idealerweise maximal 1,5 μm. Unterhalb von 0,5 μm sinkt die Prozessstabilität und die Dickengleichmäßigkeit der Deckschicht. Ab 0,7 μm wird eine sehr gute Prozessstabilität erreicht. Wenn die Deckschichten zu dick werden sinkt die Wirtschaftlichkeit, da aus Gründen der Eigenschaftssicherung (insbesondere der UV-Stabilität), Regenerate nur der Basis zugeführt werden sollten und bei zu geringer Basisschichtdicke im Vergleich zur Gesamtdicke muss dieser Schicht dann prozentual zu viel Regenerat zugeführt werden, um den Regeneratkreislauf zu schließen. Dies kann dann auch über die Basisschicht die Eigenschaften wie z.B. UV-Stabilität und Transparenz negativ beeinflussen. Zudem enthalten die Deckschichten in der Regel Partikel zur Verbesserung der Schlupfeigenschaften (Verbesserung Wickelbarkeit). Diese Partikel führen zu einem Transparenzverlust durch Rückstreuung. Wird der Anteil der Deckschichten mit solchen Partikeln zu groß, wird das Erreichen der erfindungsgemäßen Transparenzeigenschaften deutlich erschwert.

Hohe Deckschichtdicken der gegebenenfalls vorhandenen Foliendeckschicht mit Antireflexmodifikation führen infolge des bei Copolymer-modifizierten Schichten notwendigen höheren UV-Stabilisatorgehalts dieser Schicht (s.u.) zu einer unerwünschten Kostensteigerung.

Die Folie muss zudem eine geringe Transmission im Wellenlängenbereich von unterhalb 370 nm bis 300 nm aufweisen. Diese liegt bei jeder Wellenlänge im angegebenen Bereich bei kleiner 40 % bevorzugt bei kleiner 30 % und idealerweise bei kleiner 15 % (Verfahren s. Meßmethoden). Hierdurch wird die Folie vor Versprödung und Vergilbung geschützt, zudem werden hierdurch die Pflanzen und Installationen im Gewächshaus vor dem UV-Licht geschützt. Zwischen 390 und 400 nm liegt die Transparenz in einer bevorzugten Ausführungsform bei größer 20 %, bevorzugt bei größer 30 % und idealerweise bei größer 40 %, da dieser Wellenlängenbereich bereits deutlich Photosynthese-aktiv ist und das Pflanzenwachstum bei zu starker Filterung in diesem Wellenlängenbereich negativ beeinflusst würde. Die geringe UV Durchlässigkeit wird durch den Zusatz von organischem UV-Stabilisator erzielt. Eine geringe Durchlässigkeit für UV-Licht schützt den gegebenenfalls vorhandenen Flammstabilisator vor schneller Zerstörung und starker Vergilbung. Der organische UV-Stabilisator wird dabei aus der Gruppe der Triazine, Benzotriazole oder Benzoxazinone ausgewählt. Besonders bevorzugt sind dabei Triazine, u.a. weil sie bei den für PET üblichen Verarbeitungstemperaturen von 275 - 310 °C eine gute thermische Stabilität und eine geringe Ausgasung aus der Folie aufweisen. Insbesondere geeignet ist 2-(4,6-Diphenyl-1,3,5-triazin-2-yl)-5-(hexyl)oxy-phenol (Tinuvin® 1577). Am meisten bevorzugt sind dabei 2-(2'-hydroxyphenyl)-4,6- bis(4-phenylphenyl) Triazine, wie sie z.B. von der BASF unter dem Markennamen Tinuvin 1600™ vertrieben werden. Werden diese eingesetzt, können die bevorzugten niedrigen Transparenzen unterhalb von 370 nm schon bei geringeren Stabilisator-Konzentrationen erreicht werden, wobei gleichzeitig eine höhere Transparenz bei Wellenlängen oberhalb von 390 nm erreicht wird.

Die Folie, bzw. im Fall einer Mehrschichtfolie mindestens eine Deckschicht, bevorzugt beide Deckschichten enthalten daher mindestens einen organischen UV-Stabilisator. UV-Stabilisatoren werden der/den Deckschicht/ten bzw. der Monofolie in einer bevorzugten Ausführungsform in Mengen zwischen 0,3 und 3 Gew.-%, bezogen auf das Gewicht der jeweiligen Schicht, zugegeben. Besonders bevorzugt ist ein UV-Stabilisatorgehalt zwischen 0,75 und 2,8 Gew.-%. Idealerweise enthalten die Deckschichten zwischen 1,2 und 2,5 Gew.-% UV-Stabilisator. In der mehrschichtigen Ausführungsform der Folie enthält, neben den Deckschichten, bevorzugt auch die Basisschicht einen UV-Stabilisator, wobei der Gehalt an UV-Stabilisator in Gew.-% in dieser Basisschicht bevorzugt niedriger ist, als in der/den Deckschicht(en). Diese angegebenen Gehalte in der/den Deckschichten beziehen sich auf Triazinderivate. Wird statt eines Triazinderivats komplett oder teilweise ein UV-Stabilisator aus der Gruppe der Benzotriazole oder Benzoxazinone eingesetzt, so muss der ersetzte Anteil der Triazin-Komponente durch die 1,5 fache Menge einer Benzotriazol- oder Benzoxazinon-Komponente substituiert werden.

Weißfärbende, jedoch mit dem Hauptbestandteil Polyester inkompatible Polymere, wie Polypropylen, Cycloolefincopolymere (COC's), Polyethylen, unvernetztes Polystyrol etc. sind im Sinn der Erfindung zu weniger als 0,1 Gew.% (bezogen auf das Gewicht der Folie) und idealerweise überhaupt nicht (zu 0 Gew.%) enthalten, da diese die Transparenz stark senken und das Brandverhalten stark negativ beeinflussen und unter UV-Einfluss zu starker Vergilbung neigen und daher erhebliche zusätzliche Mengen an UV-Stabilisator benötigen würden, was die Wirtschaftlichkeit deutlich verschlechtert.

Basis- und Deckschicht(en) können Partikel zur Verbesserung der Wickelbarkeit enthalten. Solche anorganischen oder organischen Partikel sind z. B. Kalziumcarbonat, Apatit, Siliziumdioxide, Aluminiumoxid, vernetztes Polystyrol, vernetztes Polymethymethacrylat (PMMA), Zeolithe und andere Silikate wie Aluminiumsilikate, oder auch

Weißpigmente wie $TiO_2$ oder $BaSO_4$. Diese Partikel werden bevorzugt den Deckschichten zur Verbesserung der Wickelbarkeit der Folie zugegeben. Wenn solche Partikel zugegeben werden, ist die Verwendung von Siliziumdioxid basierten Partikeln bevorzugt, da diese wenig Transparenz reduzierend wirken. Der Anteil dieser oder anderen Partikel beträgt in keiner Schicht mehr als 3 Gew.-% und liegt bevorzugt bei unter 1 Gew.-% und idealerweise bei unter 0,2 Gew.-% in jeder Schicht, jeweils bezogen auf das Gesamtgewicht der betreffenden Schicht. Diese Partikel werden im Fall einer mehrschichtigen Ausführungsform bevorzugt nur einer oder beiden Deckschichten zugesetzt und gelangen nur zu einem geringen Anteil über das Regenerat in die Basisschicht. So wird eine minimale Reduktion der Transparenz durch die für die Wicklung benötigten Partikel erreicht. In einer bevorzugten Ausführungsform mit guter Wickelbarkeit enthält mindestens eine Außenschicht mindestens 0,07 Gew. % Partikel.

Da Brände in Gewächshäusern eine Quelle hoher wirtschaftlicher Schäden sind, muss die Folie eine reduzierte Entflammbarkeit aufweisen.

Für das Erreichen eines für Gewächshausenergiesparmatten geeigneten Brandverhaltens werden keine Flammschutzmittel benötigt, wenn die Gehalte an Partikeln, sowie Weißpigmenten und inkompatiblen Polymeren innerhalb der bevorzugten oder besser innerhalb der besonders bevorzugten Bereiche liegen (die Folie erreicht dann eine Note im Brandtest von 4 oder kleiner). Werden Gehalte höher als die bevorzugten Gehalte bei einer der genannten Gruppen verwendet, oder wird für eine besondere Gewächshausanwendung ein noch weiter reduziertes Brandverhalten benötigt, so hat es sich als günstig erwiesen, wenn die Folie zudem ein Flammschutzmittel auf Basis von phosphororganischen Verbindungen enthält. Bevorzugt sind dies Ester der Phosphorsäure oder Phosphonsäure. Es hat sich dabei als günstig erwiesen, wenn die phosphorhaltige Verbindung Teil des Polyesters ist (=einpolymerisiert). Nicht einpolymerisierte phosphorhaltige Flammschutzmittel wie z.B. Adeka-Stab 700 (4,4'-(Isopropylidene-diphenyl)bis(diphenylphosphat)) haben, neben dem Nachteil einer Ausgasung des Flammschutzmittels während der Produktion, zudem einen sehr starken nachteiligen Einfluss auf die Hydrolysestabilität der Folie, d.h. des Polyesters, so dass im feuchtwarmen Gewächshausklima eine schnelle Versprödung der Folie einsetzt und die Energiesparmatten ausgetauscht werden müssen. Diese Effekte werden durch die Verwendung von in die Polyesterkette eingebauten Phosphorverbindungen deutlich reduziert. Der Phosphor kann dabei Teil der Hauptkette sein, wie z.B. bei Verwendung von 2-Carboxyethylmethylphosphinsäure (andere geeignete Verbindungen sind z.B. in DE-A-23 46 787 beschrieben). Besonders bevorzugt sind jedoch Phosphorverbindungen, bei denen sich der Phosphor in einer Seitenkette befindet, da hierdurch die Hydrolyseneigung unter Gewächshausbedingungen am geringsten ist. Solche Verbindungen sind bevorzugt Verbindungen der Formel (I):

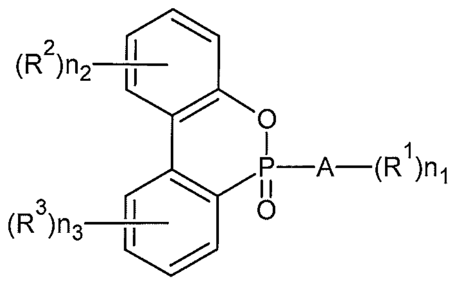

(I)

worin

| | |
|---|---|
| $R^1$ | eine esterbildende Gruppe, ausgewählt aus $-COOR^4$, $-OR^5$ und-$OCOR^6$ ist, |
| $R^2$ und $R^3$ | unabhängig voneinander ausgewählt werden aus Halogen Atomen, Kohlenwasserstoffgruppen mit 1-10 C-Atomen und $R^1$, |
| $R^4$ | Wasserstoff ist oder eine Carbonylgruppe oder eine Kohlenwasserstoffgruppe mit 1-10 C-Atomen, welche eine OH-Gruppe oder Carboxylgruppe enthalten kann, |
| $R^5$ | Wasserstoff ist oder eine Kohlenwasserstoffgruppe mit 1-10 C-Atomen, welche eine OH-Gruppe oder Carboxylgruppe enthalten kann, |
| $R^6$ | eine Kohlenwasserstoffgruppe mit 1-10 C-Atomen ist, welche eine OH-Gruppe oder Carboxylgruppe enthalten kann, |
| A | eine zweiwertige oder dreiwertige Kohlenwasserstoffgruppe mit 1-8 C-Atomen ist, |
| n1 | 1 oder 2 ist, und |
| n2 und n3 | jeweils 0, 1, 2, 3 oder 4 ist, |

insbesondere worin diese Verbindung der Formel (I) zwei esterbildende funktionale Gruppen aufweist.

Besonders geeignet ist 6-Oxo-dibenzo-[c,e]-[1,2]-oxaphosphorin-6-ylmethyl-bernsteinsäure-bis(2-hydroxyethyl)-ester (CAS-Nr. 63562-34-5). Bei Verwendung dieses Monomers in der Polyesterherstellung ergeben sich Polymere mit einpolymerisiertem Flammschutzmittel und mit einer verhältnismäßig niedrigen Hydrolyseneigung, die sich außerdem in der Folienherstellung bei guter Laufsicherheit verarbeiten lassen.

Die Menge an Flammschutzmittel wird in einer bevorzugten Ausführungsform so eingestellt, dass der Anteil an Phosphor in der Folie bei mindestens 500 ppm, bevorzugt bei mindestens 1200 ppm und idealerweise bei mindestens 1600 ppm liegt. Der Anteil an Phosphor liegt dabei unter 5000 ppm, bevorzugt unter 4000 ppm und idealerweise unter 3000 ppm (ppm bezogen auf die jeweiligen Gewichte aller eingesetzten Komponenten (nicht auf die Stoffmenge in Mol). Liegt der Phosphoranteil unterhalb von 500 ppm so brennt die Folie zu schnell ab. Je höher der Anteil an Phosphor wird, desto geringer wird die Abbrandgeschwindigkeit, aber umso geringer wird auch die Hydrolysestabilität. Oberhalb von 5000 ppm kann die Folie maximal ein Kalenderjahr lang eingesetzt werden. Unterhalb von 3000 ppm ist die Hydrolysegeschwindigkeit gering genug, so dass innerhalb mehrerer Einsatzjahre nicht mit einer Zersetzung durch Hydrolyse zu rechnen ist.

Der Phosphorgehalt kann sich gleichmäßig auf die Schichten verteilen, oder unterschiedlich sein. Es hat sich jedoch als günstig erwiesen, wenn die Deckschichten mindestens 75 % der Phosphorkonzentration der inneren Schicht(en) enthalten, bevorzugt enthalten sie die gleiche Phosphorkonzentration und idealerweise enthalten die Deckschichten mindestens 5 % mehr Phosphor als die Basisschicht. Dies führt zu einem besonders günstigen Brandverhalten und es wird eine insgesamt geringere Phosphormenge benötigt.

Die erfindungsgemäße Folie weist eine Transparenz von mindestens 93,5 % auf, bevorzugt liegt die Transparenz bei mindestens 94,5 % und idealerweise liegt die Transparenz bei mindestens 95,3 %. Je höher die Transparenz, desto besser wird das Pflanzenwachstum im Gewächshaus.

Erreicht wird die erfindungsgemäße Transparenz, wenn die erfindungsgemäßen Rohstoffe und Additiv- und/oder Partikelgehalte verwendet werden. Hauptsächlich wird die Erhöhung der Transparenz aber durch die auf beiden Folienaußenseiten vorhandenen Antireflexschichten erreicht.

Die erfindungsgemäße Folie weist mindestens einseitig eine Beschichtung mit einem Material auf, welches einen geringeren Brechungsindex als die Polyesterfolie aufweist. Der Brechungsindex bei einer Wellenlänge von 589 nm in Maschinenrichtung der Folie liegt dabei unterhalb von 1,64, bevorzugt unterhalb von 1,60 und idealerweise unterhalb von 1,58.

Besonders geeignet sind Polyacrylate und Silikone und Polyurethane, sowie Polyvinylacetat. Geeignete Acrylate sind beispielsweise in der EP-A-0144948 beschrieben und geeignete Silikone beispielsweise in der EP-A-0769540 beschrieben. Besonders bevorzugt sind Beschichtungen auf Acrylatbasis, da diese im Gewächshaus nicht zum Ausschwitzen von Beschichtungskomponenten bzw. Abblättern von Teilen der Beschichtung neigen, was bei Beschichtungen auf Silikonbasis weit eher der Fall ist. In einer besonders bevorzugten Ausführungsform enthält die Beschichtung Copolymere aus Acrylat und Silikon.

In einer bevorzugten Ausführungsform mit einer Acrylatbeschichtung ist die Acrylatbeschichtung zu mehr als 70 Gew.-% Methylmethacrylat und Ethylacrylat, besonders bevorzugt zu mehr als 80 Gew. % Methylmethacrylat und Ethylacrylat und idealerweise zu mehr als 93 Gew. % aus Methylmethacrylat und Ethylacrylat Wiederholungseinheiten aufgebaut. Die anderen Wiederholungseinheiten stammen aus anderen üblichen mit Methylmethacrylat copolymerisierbaren Monomeren wie z.B. Butadien, Vinylacetat, etc.. In einer bevorzugten Ausführungsform besteht mehr als 50 Gew.% der Acrylatbeschichtung aus Methylmethacrylat-Wiederholungseinheiten. In einer bevorzugten Ausführungsform enthält die Acrylatbeschichtung weniger als 10 Gew.%, besonders bevorzugt weniger als 5 Gew.% und idealerweise weniger als 1 Gew.% Wiederholungseinheiten, die ein aromatisches Strukturelement enthalten. Oberhalb von 10 Gew. % Anteil an Wiederholungseinheiten mit aromatischem Strukturelement kommt es zu einer deutlichen Verschlechterung der Bewitterungsstabilität der Beschichtung.

Die Dicke dieser Beschichtung/en beträgt jeweils mindestens 60 nm bevorzugt mindestens 70 nm und insbesondere mindestens 78 nm und beträgt maximal 130 nm, bevorzugt maximal 115 nm und idealerweise maximal 110 nm. Hierdurch wird eine ideale Transparenzerhöhung im gewünschten Wellenlängenbereich erreicht. In einer bevorzugten Ausführungsform liegt die Dicke der Beschichtung bei mehr als 87 nm, und besonders bevorzugt bei mehr als 95 nm. In dieser bevorzugten Ausführungsform liegt die Dicke der Beschichtung bevorzugt bei kleiner 115 nm und idealerweise unter 110 nm. In diesem engen Dickenbereich, ist sowohl die Transparenzerhöhung in der Nähe des Optimums und gleichzeitig ist in diesem Bereich die Reflektion des UV und Blaubereichs des Lichts gegenüber dem Rest des sichtbaren Spektrums erhöht. Dies spart einerseits UV-Stabilisator, führt aber vor allem dazu, dass sich das Blau/Rot-Verhältnis zugunsten des Rot-Anteils verschiebt. Hierdurch wird ein verbessertes Pflanzenwachstum, ein vermehrter Blüten- und Fruchtansatz erreicht und einer Vergeilung der Pflanzen entgegen gewirkt.

Die Beschichtung/en werden bevorzugt inline vor der Querstreckung mittels bekannter Verfahren (z.B. reverse gravure roll oder auch meyer bar) aus bevorzugt wässriger Dispersion auf die Folie aufgebracht. In einer besonders bevorzugten Ausführungsform enthält die Beschichtung bezogen auf das Trockengewicht mindestens 1 Gew.% eines UV-Stabilisators, besonders bevorzugt ist dabei Tinuvin 479, oder Tinuvin 5333-DW. Weniger bevorzugt sind HALS

(hindered amin light stabilizers), da dieser bei der Regenerierung (Rückführung von Folienresten aus der Produktion) zu einer deutlichen Gelbfärbung des Materials und damit zur Transparenzreduktion führen.

Auch die der oben beschriebenen Antireflexbeschichtung gegenüberliegende Folienseite weist einen Antireflexmodifikation auf. In einer bevorzugten Ausführungsform ist dies ebenfalls eine auf die Folienoberfläche aufgebrachte Anitireflexbeschichtung, wie auf der anderen Folienoberfläche. Diese Beschichtung entspricht der Beschreibung der gegenüberliegenden Beschichtung und ist in einer bevorzugten Ausführungsform hinsichtlich Material und Beschichtungsdicke identisch mit der gegenüberliegenden Beschichtung. In einer weiteren bevorzugten Ausführungsform, entspricht die Beschichtung der Beschreibung der gegenüberliegenden Beschichtung, ist aber hinsichtlich des Materials nicht identisch, d.h. z.B. dass die Seite 1 eine Beschichtung mit einem Acrylat aufweist und die Seite 2 eine Beschichtung mit einem Acrylat-Silicon-Copolymer.

Mit einer beidseitig aufgebrachten Antireflexbeschichtung können die erfindungsgemäß besonders bevorzugten Transparenzwerte von > 95,3 % erreicht werden.

In einer weiteren bevorzugten Ausführungsform befindet sich auf der der Antireflexschicht gegenüberliegenden Seite der Folie eine weitere durch Co-Extrusion aufgebrachte Schicht auf der Basisschicht B. Diese Schicht besteht aus einem Polyester mit einem geringeren Brechungsindex. Der Brechungsindex bei einer Wellenlänge von 589 nm in Maschinenrichtung des Beschichtungsmaterials liegt unterhalb von 1,70, bevorzugt unterhalb von 1,65 und idealerweise unterhalb von 1,60. Dieser Brechungsindex wird dadurch erreicht, dass das Polymer einen Co-Monomeranteil von mindestens 2 Mol%, bevorzugt mindestens 3 Mol % und idealerweise mindestens 6 Mol % enthält. Unterhalb von 2 Mol% können die erfindungsgemäßen Werte für den Brechungsindex nicht erreicht werden. Der Co-Momnomeranteil liegt in einer bevorzugten Ausführungsform unterhalb von 20 Mol%, besonders bevorzugt unterhalb von 18 Mol% und idealerweise unterhalb von 16 Mol.%. Oberhalb von 16 Mol.% wird die UV-Stabilität aufgrund der amorphen Natur der Schicht deutlich schlechter und oberhalb von 20 Mol.% kann auch mit einem Mehr an UV-Stabilisator nicht mehr das gleiche Niveau an UV-Stabilität erreicht werden, wie unterhalb von 16 Mol.%.

Als Co-Monomer gelten alle Monomere außer Ethylenglycol und Terephthalsäure (bzw. Dimethylterephthalat). Die erfindungsgemäßen Anteile an Co-Monomer beziehen sich immer auf die Summe aller Co-Monomere. Bevorzugt werden nicht mehr als 2 Co-Monomere gleichzeitig verwendet. Besonders bevorzugt als Comonomer ist Isophthalsäure. In einer bevorzugten Ausführungsform enthält diese Deckschichte mehr als 8 Mol-% IPA und idealerweise mehr als 10 Mol-% IPA, aber weniger als 20 Mol-% IPA, bevorzugt weniger als 19 Mol-% und idealerweise weniger als 15 Mol-% bzgl. der Dicarbonsäure-Komponente des Polyesters. Eine Schicht mit einem Co-Monomer-Gehalt größer 8 Mol-% (bzgl. des Polyesters) enthält zudem in einer bevorzugten Ausführungsform mindestens 1,5 Gew.-% bevorzugt mehr als 2,1 Gew.-% organischen UV-Stabilisator (wie oben beschrieben) bzgl. des Gewichts der Schicht, um die schlechtere UV-Stabilität von Schichten mit erhöhtem Co-Monomer-Gehalt zu kompensieren.

Die Basisschicht B (ohne Berücksichtigung von UV-Stabilisatoren, Partikeln, Flammschutz-mittel, Polyolefinen und sonstiger Additiven) besteht bevorzugt zu mindestens 80 Gew.-% aus einem thermoplastischen Polyester. Dafür geeignet sind unter anderem Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), sowie aus beliebigen Mischungen der genannten Carbonsäuren und Diole. Besonders bevorzugt sind Polyester, die zu mindestens 85 Mol-%, bevorzugt mindestens 90 Mol-% und idealerweise zu mindestens 92 Mol-% aus Ethylenglykol- und Terephthalsäure-Einheiten bestehen. Der Einsatz von Naphthalin-2,6-dicarbonsäure hat gegenüber dem Einsatz von Terephthalsäure keine Vorteile, so dass bedingt durch den höheren Preis von Naphthalin-2,6-dicarbonsäure üblicherweise auf diese verzichtet wird. Die restlichen Monomereinheiten stammen aus anderen aliphatischen, cycloaliphatischen oder aromatischen Diolen bzw. Dicarbonsäuren.

Geeignete andere aliphatische Diole sind beispielsweise Diethylenglykol, Triethylenglykol, aliphatische Glykole der allgemeinen Formel $HO-(CH_2)n-OH$, wobei n bevorzugt kleiner 10 ist, Cyclohexandimethanol, Butandiol, Propandiol, etc. Geeignete andere Dicarbonsäuren sind z.B. Isophthalsäure, Adipinsäure etc. Es hat sich als günstig für die Laufsicherheit und die Bewitterungsstabilität in Gewächshausanwendungen erwiesen, wenn die Folie weniger als 2 Gew.-%, bevorzugt weniger als 1,5 Gew.-% Diethylenglykol (bzgl. der Masse des Polyesters der Schicht) bzw. die davon abgeleiteten Einheiten enthält. Es hat sich aus den gleichen Gründen als günstig erwiesen, wenn die Folie weniger als 12 Mol-%, bevorzugt weniger als 8 Mol-% und idealerweise weniger als 5 Mol-% Isophthalsäure (IPA) bzgl. der Dicarbonsäure-Komponente des Polyesters enthält. Es hat sich weiterhin als günstig erwiesen, wenn die Folie weniger als 3 Mol-%, idealerweise weniger als 1 Mol-% CHDM (1,4-Cyclohexandimethanol) bzgl. der Diol-Komponente des Polyesters enthält. Es hat sich weiterhin als günstig erwiesen, wenn der Gesamtgehalt (bezogen auf das Gesamtgewicht der Folie) an Isophthalsäure, Diethylenglykol und CHDM nicht größer ist als 7 Gew.-% und idealerweise kleiner ist als 6 Gew.-%. Wenn der Gehalt an den genannten Co-Monomeren, insbesondere der von CHDM, die genannten Grenzen nicht überschreitet ist die UV-Stabilität der aus der Folie hergestellten Energiesparmatten signifikant besser, als bei Ausführungen in denen die Grenzen überschritten werden.

Ein Polymer gemäß dieser Beschreibung kommt neben der Basisschicht auch in den übrigen Schichten der Folie vor. Eine Ausnahme bildet, in einer bevorzugten Ausführungsform, die oben beschriebene durch Co-Extrusion auf

der Antireflexschicht gegenüberliegenden Seite der Folie auf der Basisschicht B aufgebrachte Schicht zur Reflektionsreduktion. Diese enthält in den oben angegebenen Mengen Co-Monomere.

Für die Herstellung der erfindungsgemäßen Folie wird der SV-Wert der eingesetzten Polyesters so gewählt, dass die Folie einen SV-Wert von > 600, bevorzugt von > 650 und idealerweise von > 700 aufweist. Der SV-Wert der Folie ist dabei < 950 und bevorzugt < 850. Liegt der SV-Wert unterhalb von 600, so wird die Folie schon bei der Herstellung so brüchig, dass es zu häufigen Abrissen kommt. Zudem kommt es in den Endanwendungen zu einem schnelleren weiteren Viskositätsverlust unter Verlust der Flexibilität der Folien mit Bruchfolge. Außerdem werden die weiter unten genannten mechanischen Festigkeiten bei geringerem SV-Wert nicht mehr sicher erreicht. Wenn die Folie einen höheren SV als 950 aufweisen soll, dann müssten die eingesetzten Polymere ebenfalls einen mittleren Sv von mindestens 950 haben.

Diese würden dann in der Schmelze im Extruder so zäh bleiben, dass übermäßig hohe Ströme beim Betrieb der Extruder-Elektromotoren auftreten und es zu Druckschwankungen in der Extrusion kommen würde, was zu einer schlechten Laufsicherheit führen würde.

**Verfahren zur Herstellung**

Die Polyesterpolymere der einzelnen Schichten werden durch Polykondensation hergestellt, entweder ausgehend von Dicarbonsäuren und Diol oder auch ausgehend von den Estern der Dicarbonsäuren, vorzugweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein muss und bevorzugt größer als 750 ist.

Die Partikel, sowie UV-Stabilisatoren können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Bevorzugt kann ein konzentriertes partikelhaltiges oder additivhaltiges Polyester-Masterbatch mit einem Zweischneckenextruder hergestellt werden und bei der Folienextrusion mit partikelfreiem Polyester verdünnt werden. Es hat sich dabei als günstig erwiesen, wenn keine Masterbatche eingesetzt werden, die weniger als 30 Gew.-% Polyester enthalten. Insbesondere das $SiO_2$-Partikel enthaltende Masterbatch sollte nicht mehr als 20 Gew.-%ig an $SiO_2$ sein (wg. der Gefahr der Gelbildung). Eine weitere Möglichkeit besteht darin, Partikel und Additive direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester bzw. die Polyestermischung der Schicht oder bei Mehrschichtfolien der einzelnen Schichten in Extrudern komprimiert und verflüssigt. Dann wird/werden die Schmelze/Schmelzen in einer Ein- bzw. Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80 bis 130 °C (Aufheiztemperaturen 80 bis 130 °C) und in Querrichtung in einem Temperaturbereich von 90 °C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 3,4:1. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4:1. Ein höheres Querstreckverhältnis als 4,8 führt zu einer deutlich verschlechterten Herstellbarkeit (Abrisse) und sollte daher bevorzugt vermieden werden. Zum Erreichen der gewünschten Folieneigenschaften hat es sich als vorteilhaft erwiesen, wenn die Strecktemperatur (in MD und TD) unter 125 °C und bevorzugt unter 118 °C liegt. Vor der Querstreckung können eine oder beide Oberfläche(n) der Folie nach den an sich bekannten Verfahren In-Line beschichtet werden. Die In-Line-Beschichtung kann bevorzugt zur Aufbringung einer Beschichtung zur Transparenzerhöhung (Antireflex) benutzt werden. Bei der nachfolgenden Thermofixierung wird die Folie über eine Zeitdauer von etwa 0,1 bis 10 s unter Spannung bei einer Temperatur von 150 bis 250 °C gehalten und zum Erreichen der bevorzugten Schrumpf- und Längungswerte um mindestens 1 %, bevorzugt mindestens 3 % und besonders bevorzugt mindestens 4 % in Querrichtung relaxiert. Diese Relaxation findet bevorzugt in einem Temperaturbereich von 150 bis 190 °C statt. Zur Reduktion des Transparenzbows liegt die Temperatur im ersten Fixierfeld bevorzugt unter 220 °C

und besonders bevorzugt unter 190 °C. Zudem sollten vorzugsweise aus dem gleichen Grund mindestens 1% bevorzugt mindestens 2% des Gesamtquerstreckverhältnisses im ersten Fixierfeld liegen, in dem üblicherweise nicht mehr gestreckt wird. Anschließend wird die Folie in üblicher Weise aufgewickelt.

## Weitere Folieneigenschaften

Die erfindungsgemäße Folie nach dem oben beschrieben Verfahren weist bevorzugt bei 150 °C einen Schrumpf in Längs- und Querrichtung von unter 5 %, bevorzugt unter 2 % und besonders bevorzugt von unter 1,5 % auf. Diese Folie weist weiterhin bei 100 °C eine Ausdehnung von weniger als 3, bevorzugt von weniger als 1 und besonders bevorzugt von weniger als 0,3 % auf. Diese Formstabilität kann beispielsweise durch geeignete Relaxation der Folie vor dem Aufwickeln erhalten werden (s. Verfahrensbeschreibung). Diese Formstabilität ist wichtig, um bei der Verwendung in Energiesparmatten ein Nachschrumpfen der Streifen zu vermeiden, welches zum vermehrten Durchtritt von Luft zwischen den Streifen führen würde (Reduktion der Energiesparwirkung). Sowohl bei der Herstellung von Rollos als auch bei Energiesparmatten führen sowohl ein zu hoher Schrumpf als auch eine zu hohe Ausdehnung, zur wellenartigen Verdehnungen der fertigen Produkte.

Die erfindungsgemäße Folie weist weiterhin einen E-Modul in beiden Folienrichtungen von größer 3000 N/mm$^2$ und bevorzugt von größer 3500 N/mm$^2$ und besonders bevorzugt (in mindestens einer Folienrichtung) von > 4500 N/mm$^2$ in Längs- und Querrichtung auf. Die F5-Werte (Kraft bei 5 % Dehnung) liegen bevorzugt in Längs- und Querrichtung bei über 80 N/mm$^2$ und besonders bevorzugt bei über 90 N/mm$^2$. Diese mechanischen Eigenschaften können durch Variation der Parameter der biaxialen Streckung der Folie im Rahmen der oben angegebenen Verfahrensbedingungen eingestellt und erhalten werden.

Folien mit den genannten mechanischen Eigenschaften werden in der Anwendung unter Zug nicht übermäßig verdehnt und bleiben gut führbar.

Zum Erreichen der erfindungsgemäßen transparenzwerte hat es sich zudem als günstig erwiesen, wenn die Trübung der Folie kleiner ist als 20 %, bevorzugt, kleiner ist als 8 % und idealerweise kleiner ist als 3 %. Je geringer die Trübung ist, desto geringer ist auch die Rückstreuung von Licht und damit der Transparenzverlust. Bei Einhaltung der erfindungsgemäßen Partikelgehalte und Polymerzusammensetzung werden diese Trübungswerte erreicht.

## Anwendung

Die erfindungsgemäßen Folien eignen sich hervorragend als hochtransparente Konvektionssperre, insbesondere zur Herstellung von Energiesparmatten in Gewächshäusern. Hierbei wird die Folie üblicherweise in schmale Streifen geschnitten, aus denen anschließend zusammen mit Polyestergarn (auch dieses muss UV-stabilisiert sein) ein Gewebe/Gelege hergestellt wird, welches im Gewächshaus aufgehängt wird. Die Streifen aus erfindungsgemäßer Folie können dabei mit Streifen aus anderen Folien kombiniert werden (insbesondere mit Folien mit einer Lichtstreuwirkung).

Alternativ kann auch die Folie selbst (Vollfläche, kein Gewebe) im Gewächshaus installiert werden.

Diese Installationen führen zu einer Verringerung der Energieverluste während der Nacht und insbesondere in den frühen Morgenstunden die Pflanze treffende, Lichtmenge und somit zu einer Kühlung während des Tages und verteilen gleichzeitig die verbleibende Lichtmenge durch die hohe Lichtstreuung homogen im Raum und sorgen so für eine gute Ausleuchtung aller Pflanzen/Pflanzenteile.

Während der Nacht führen diese Installationen zu einem geringeren Wärmeverlust des Gewächshauses nach außen.

## Analytik

Zur Charakterisierung der Rohstoffe und der Folien wurden die folgenden Messmethoden benutzt:

### Messung des mittleren Partikel-Durchmessers $d_{50}$

Die Bestimmung der durchschnittlichen Partikelgröße $d_{50}$ wurde mit Hilfe eines Malvern Master Sizer 2000 durchgeführt. Dazu wurden die einzusetzenden Partikel in Wasser dispergiert und in eine Küvette überführt, die im Messgerät analysiert wurde, wobei die Größenbestimmung mittels Laserbeugung erfolgte. Im Allgemeinen, nimmt dabei der Detektor ein Intensitätsbild des gebeugten Laserlichts auf, aus dessen winkelabhängiger Lichtintensität mithilfe einer mathematischen Korrelationsfunktion die Partikelgrößenverteilung berechnet wird. Die Partikelgrößenverteilung ist durch zwei Parameter gekennzeichnet, dem Medianwert $d_{50}$ (= Lagemaß für den Mittelwert) und dem Streumaß SPAN98 (= Maß für die Streuung des Partikeldurchmessers). Der Messvorgang erfolgte automatisch und beinhaltete auch die mathematische Bestimmung des $d_{50}$-Wertes.

Messungen an der mittels dieser Partikel hergestellten Folie ergeben einen um 15 - 25 % niedrigeren d50 Wert

als die eingesetzten Partikel.

### UV/Vis Spektren bzw. Transmission bei Wellenlänge x

Die Folien wurden in Transmission in einem UV/Vis Zweistrahlspektrometer (Lambda 12 oder 35) der Firma Perkin Elmer USA gemessen. Eine etwa (3 x 5) cm große Folienprobe wird dazu über eine Flachprobenhaltevorrichtung senkrecht zum Messstrahl in den Strahlengang eingelegt. Der Messstrahl führt über eine 50 mm-Ulbrichtkugel hin zum Detektor, wo die Intensität zur Bestimmung der Transparenz bei gewünschter Wellenlänge bestimmt wird.

Als Hintergrund dient Luft. Die Transmission wird bei der gewünschten Wellenlänge abgelesen.

### Transparenz

Die Transparenz wurde nach ASTM-D 1003-61 (Methode A) gemessen mittels hazegard plus der Firma BYK-Gardner GmbH Deutschland.

### Trübung

Die Bestimmung der Trübung erfolgt nach Norm ASTM-D-1003 und mittels hazegard plus der Firma BYK-Gardner GmbH.

### SV-Wert (standard viscosity)

Die Standardviskosität in verdünnter Lösung (SV) wurde, angelehnt an DIN 53728 Teil 3, in einem Ubbelohde Viskosimeter bei (25 ± 0,05)°C gemessen. Dichloressigsäure (DCE) wurde als Lösemittel verwendet. Die Konzentration des gelösten Polymers betrug 1 g Polymer / 100 ml reines Lösemittel. Die Auflösung des Polymers erfolgte 1 Stunde bei 60°C. Wurden die Proben nach dieser Zeit nicht vollständig gelöst, wurden noch bis zu zwei Auflösungsversuche für jeweils 40 Min. bei 80°C durchgeführt und die Lösungen anschließend 1 Stunde bei einer Drehzahl von 4100 $min^{-1}$ zentrifugiert. Aus der relativen Viskosität ($\eta_{rel=}\eta/\eta_s$) wird der dimensionslose SV-Wert wie folgt ermittelt:

$$SV = (\eta_{rel}-1) \times 1000$$

Der Anteil an Partikeln in der Folie bzw. Polymerrohstoff wurde mittels Aschebestimmung ermittelt und durch entsprechende Mehreinwaage korrigiert. D.h.:

$$\text{Einwaage} = (\text{Einwaage entsprechend 100\% Polymer}) / [(100\text{-Partikelgehalt in Gew.-\%})/100)]$$

### Mechanische Eigenschaften

Die mechanischen Eigenschaften wurden über Zugprüfung angelehnt an DIN EN ISO 572-1 und -3 (Probekörper Typ 2) an 100 mm x 15 mm großen Folienstreifen bestimmt.

### Schrumpf

Der thermische Schrumpf wurde an quadratischen Folienmustern mit einer Kantenlänge von 10 cm bestimmt. Die Proben wurden so ausgeschnitten, dass eine Kante parallel zur Maschinenrichtung und eine Kante senkrecht zur Maschinenrichtung verlief. Die Proben wurden genau ausgemessen (die Kantenlänge $L_0$ wurde für jede Maschinenrichtung TD und MD bestimmt, $L_{0\ TD}$ und $L_{0\ MD}$) und 15 min bei der angegeben Schrumpfungstemperatur (hier 150 °C) in einem Umlufttrockenschrank getempert. Die Proben wurden entnommen und bei Raumtemperatur genau ausgemessen (Kantenlänge $L_{TD}$ und $L_{MD}$). Der Schrumpf ergibt sich aus der Gleichung:

$$\text{Schrumpf [\%] MD} = 100 \bullet (L_{0\ MD} - L_{MD}) / L_{0\ MD}, \text{ bzw.}$$

$$\text{Schrumpf [\%] TD} = 100 \bullet (L_{0\,TD} - L_{TD}) / L_{0\,TD}$$

**Ausdehnung**

Die thermische Ausdehnung wurde an quadratischen Folienmustern mit einer Kantenlänge von 10 cm bestimmt. Die Proben wurden genau ausgemessen (Kantenlänge $L_0$), 15 Minuten bei 100 °C in einem Umlufttrockenschrank getempert, und anschließend bei Raumtemperatur genau ausgemessen (Kantenlänge L). Die Ausdehnung ergibt sich aus der Gleichung:

$$\text{Ausdehnung [\%]} = 100 * (L - L_0) / L_0$$

und wurde in jeder Folienrichtung separat ermittelt.

**UV-Stabilität**

Die UV-Stabilität wurde wie in DE69731750 (DE von WO9806575) auf Seite 8 beschrieben bestimmt und der UTS Wert in % vom Ausgangswert angegeben, wobei die Bewitterungsdauer nicht 1000 sondern 2000 h betrug.

**Flammfestigkeit**

Ein 30 * 30 cm großes Folienstück wurde mit 2 Klammern an den Ecken gefasst und senkrecht aufgehängt. Im Allgemeinen ist darauf zu achten, dass am Ort der Aufhängung keine Luftbewegung herrscht, die das Folienstück merklich bewegt. Eine leichte Abluft von oben ist dabei akzeptabel. Das Folienstück wurde anschließend in der Mitte der unteren Seite mit einer Flamme von unten beflammt. Zur Beflammung kann ein handelsübliches Feuerzeug, oder besser eine Bunsenbrenner genutzt werden. Die Flamme muss dabei länger als 1 cm und kürzer als 3 cm sein. Die Flamme wurde solange an die Folie gehalten, bis diese ohne Zündflamme weiterbrennte (mindestens 3 Sekunden). Die Flamme wurde dabei aber maximal für 5 Sekunden an die Folie gehalten und der abbrennenden / wegschrumpfenden Folie nachgeführt. Es wurden 4 Zündvorgänge durchgeführt.

In den hier angeführten Beispielen wird die Flammfestigkeit mit folgenden Noten bewertet:

1 = die Folie hatte sich bei 4 Zündvorgängen keinmal länger als 3 Sekunden entzündet.
2 = die Folie hatte sich entzündet und ist nach weniger als 15 Sekunden selbst verloschen und es war noch mehr als 30 % der Folienfläche vorhanden.
3 = die Folie hatte sich entzündet und ist nach weniger als 20 Sekunden selbst verloschen und es war noch mehr als 30 % der Folienfläche vorhanden.
4 = die Folie hatte sich entzündet und ist nach weniger als 40 Sekunden selbst verloschen und es war noch mehr als 30 % der Folienfläche vorhanden.
5 = die Folie hatte sich entzündet und ist nach weniger als 40 Sekunden selbst verloschen und es war noch mehr als 10 % der Folienfläche vorhanden.
6 = die Folie hatte sich entzündet und hat mehr als 40 Sekunden gebrannt, oder es war nach dem selbst Verlöschen weniger als 10 % der Folienfläche vorhanden.

**Bestimmung des Brechungsindex in Abhängigkeit der Wellenlänge**

Um den Brechungsindex eines Foliensubstrats und einer aufgebrachten Beschichtung in Abhängigkeit der Wellenlänge zu bestimmen, bedient man sich der spektroskopischen Ellipsometrie.
J. A. Woollam et al, Overview of variable-angle spectroscopic ellipsometry (VASE): I. Basic theory and typical applications, Proc. SPIE Vol. CR72, p. 3-28, Optical Metrology, Ghanim A. Al-Jumaily; Ed.

Dazu analysiert man zunächst die Basisfolie ohne Beschichtung oder modifizierte Coexseite. Zur Unterdrückung der Rückseitenreflexion raut man die Folienrückseite mit einem Schleifpapier mit möglichst feiner Körnung (beispielsweise P1000) an. Die Folie wird anschließend mit einem spektroskopischen Ellipsometer vermessen, hier ein M-2000 der Firma J. A. Woollam Co., Inc., das mit einem rotierenden Kompensator ausgestattet ist. Die Maschinenrichtung der Probe liegt parallel zum Lichtstrahl. Die vermessene Wellenlänge liegt im Bereich von 370 bis 1000 nm, die Messwinkel betragen 65, 70 und 75 °.
Die ellipsometrischen Daten $\Psi$ und $\Delta$ werden anschließend mit einem Modell nachempfunden. Dazu eignet sich im

vorliegenden Fall das Cauchy-Modell $n(\lambda) = A + \frac{B}{\lambda^2} + \frac{C}{\lambda^4}$ (Wellenlänge λ in μm). Die Parameter A, B und C werden so variiert, dass die Daten möglichst gut mit dem gemessenen Spektrum Ψ und Δ übereinstimmen. Zur Prüfung der Güte des Modells kann der MSE-Wert einbezogen werden, der möglichst klein sein soll und Modell mit gemessenen Daten (Ψ(λ) und Δ(λ)) vergleicht.

$$MSE = \sqrt{\frac{1}{3n - m} \sum_{i=1}^{n} \left[ \left(N_{E,i} - N_{G,i}\right)^2 + \left(C_{E,i} - C_{G,i}\right)^2 + \left(S_{E,i} - S_{G,i}\right)^2 \right]} \cdot 1000$$

n = Anzahl Wellenlängen, m = Anzahl Fit Parameter, N = cos(2Ψ), C = sin(2Ψ) cos(Δ), S = sin(2Ψ) sin(Δ) [1]

Die erhaltenen Cauchy-Parameter A, B und C für die Basisfolie erlauben die Berechnung des Brechungsindex n in Abhängigkeit der Wellenlänge, gültig im vermessenen Bereich 370 bis 1000 nm.

Die Beschichtung oder eine modifizierte coextrudierte Schicht kann analog analysiert werden. Die Parameter der Folienbasis sind nun schon bekannt und sollten bei der Modellierung konstant gehalten werden. Auch zur Bestimmung der Beschichtung der coextrudierte Schicht muss die Folienrückseite, wie oben beschrieben, angeraut werden. Hier kann man ebenfalls das Cauchy-Modell verwenden, um den Brechungsindex in Abhängigkeit der Wellenlänge zu beschreiben. Die jeweilige Schicht befindet sich jetzt jedoch auf dem bereits bekannten Substrat, was in der jeweiligen Auswertesoftware berücksichtigt wird (CompleteEASE oder WVase). Die Dicke der Schicht beeinflusst das erhaltene Spektrum und muss bei der Modellierung berücksichtigt werden.

**Beispiele**

Beispiel 1-3 und VB1-7

Die Polymermischungen werden bei 292 °C aufgeschmolzen und durch eine Breitschlitzdüse auf eine auf 50° C temperierte Kühlwalze elektrostatisch angelegt. Anschließend wird sie bei folgenden Bedingungen längs- und dann quergestreckt:

| | | | |
|---|---|---|---|
| Längsstreckung | Aufheiztemperatur | 75-115 | °C |
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1.Fixierfeld) | 3,9 | |
| Fixierung | Temperatur | 237 - 150 | °C |
| | Dauer | 3 | s |
| | Relaxation in TD bei 200 - 150 °C | 5 | % |
| Fixierung | Temperatur 1. Fixierfeld | 170 | °C |

In den Beispielen (erfindungsgemäß) kommen die folgenden Rohstoffe zum Einsatz:

PET1 = Polyethylenterephthalatrohstoff aus Ethylenglykol und Terephthalsäure mit einem SV Wert von 820 und DEG-Gehalt von 0,9 Gew.-% (Diethylenglykolgehalt als Monomer).

PET2 = Polyethylenterephthalatrohstoff mit einem SV-Wert von 730, der (6-Oxo-dibenzo-[c,e]-[1,2]-oxaphosphorin-6-ylmethyl)-bernsteinsäure-bis(2-hydroxyethyl)-ester als Comonomer enthält, wobei der Anteil an Phosphor aus diesem 18000 ppm im Rohstoff beträgt.

PET3 = Polyethylenterephthalatrohstoff mit einem SV-Wert von 700, der 20 Gew.-% Tinuvin 1577 enthält. Der UV-Stabilisator hat folgende Zusammensetzung 2-(4,6-Diphenyl-1,3,5-triaziin-2-yl)-5-(hexyl)oxy-phenol (®Tinuvin 1577

der Firma BASF, Ludwigshafen, Deutschland). Tinuvin 1577 hat einen Schmelzpunkt von 149 °C und ist bei 330 °C thermisch stabil.

PET 4 = Polyethylenterephthalatrohstoff mit einem SV-Wert von 700 und 15 Gew.-% Siliziumdioxidpartikel Sylysia310 P mit einem d50 von 2,7 μm (Hersteller FUJI SILYSIA CHEMICAL LTD. Greenville NC/USA) . Das $SiO_2$ wurde in einem Zweischneckenextruder in das Polyethylenterephthalat eingearbeitet

PET 5 = Polyethylenterephthalatrohstoff mit einem SV-Wert von 710, der 25 Mol-% Isophthalsäure als Comonomer enthält.

Die nachfolgende Tabelle 1 fasst die Rezepturen, Herstellbedingungen und resultierenden Folieneigenschaften zusammen:

Tabelle 1

| | | Beispiel 1 | Beispiel 2 | Beispiel 3 | | VB1 | VB2 | VB3 | VB4 | VB5 |
|---|---|---|---|---|---|---|---|---|---|---|
| Schicht | Foliendicke | 15 | 15 | 15 | | 15 | 15 | 15 | 15 | 15 |
| | Dicke A | 0,8 | 0,8 | 0,8 | | 0,8 | 0,8 | 0,8 | 0,8 | 0,8 |
| | Dicke B | 13,4 | 13,4 | 13,4 | | 13,4 | 13,4 | 13,4 | 13,4 | 13,4 |
| | Dicke C | 0,8 | 0,8 | 0,8 | | 0,8 | 0,8 | 0,8 | 0,8 | 0,8 |
| | Beschichtung auf Seite A | Trockendicke 96 nm. Acrylat und Antragsmethode wie in Beispiel 1 aus EP0144948 | Trockendicke 96 nm. Acrylat und Antrags-methode wie in Beispiel 1 aus EP0144948 | Trockendicke 96 nm. Acrylat und Antrags-methode wie in Beispiel 1 aus EP0144948 | | Trockendicke 30 nm. Acrylat und Antrags-methode wie in Beispiel 1 aus EP0144948 | Trockendicke 30 nm. Acrylat und Antrags-methode wie in Beispiel 1 aus EP0144948 | | Trockendicke 160 nm. Acrylat und Antrags-methode wie in Beispiel 1 aus EP0144948 | |
| | Beschichtung auf Seite C | | Trockendicke 96 nm. Acrylat und Antrags-methode wie in Beispiel 1 aus EP0144948 | Trockendicke 96 nm. Acrylat und Antrags-methode wie in Beispiel 1 aus EP0144948 | | | Trockendicke 30 nm. Acrylat und Antrags-methode wie in Beispiel 1 aus EP0144948 | | Trockendicke 150 nm. Acrylat und Antrags-methode wie in Beispiel 1 aus EP0144948 | |
| A-Schicht | PET 1 | 89 | 89 | 77 | | 89 | 89 | 89 | 89 | 34 |
| | PET 2 | | | 12 | | | | | | |
| | PET 3 | 10 | 10 | 10 | | 10 | 10 | 10 | 10 | 15 |
| | PET 4 | 1 | 1 | 1 | | 1 | 1 | 1 | 1 | 1 |
| | PET 5 | | | | | | | | | 50 |
| B-Schicht | PET 1 | 95 | 95 | 83 | | 95 | 95 | 95 | 95 | 95 |
| | PET 2 | | | 12 | | | | | | |
| | PET 3 | 5 | 5 | 5 | | 5 | 5 | 5 | 5 | 5 |

| | | | | | | | | | | |
|---|---|---|---|---|---|---|---|---|---|---|
| C-Schicht | PET 1 | 34 | 89 | 77 | | 34 | 89 | 89 | 89 | 34 |
| | PET 2 | | | 12 | | | | | | |
| | PET 3 | 15 | 10 | 10 | | 15 | 10 | 10 | 10 | 15 |
| | PET 4 | 1 | 1 | 1 | | 1 | 1 | 1 | 1 | 1 |
| | PET 5 | 50 | | | | 50 | | | | 50 |
| Transparenz (Bahnmitte) | in % | 94,3 | 95,5 | 95,5 | | 92,8 | 92,1 | 90,8 | 93,2 | 93,1 |
| Trübung | | 1,8 | 2 | 2 | | 1,9 | 1,8 | 1,8 | 2 | 2 |
| UV-Stabilität UTS | in % | 65 | 75 | 66 | | 64 | 74 | 77 | 75 | 64 |
| Flammtest | Noten | 4 | 4 | 2 | | 4 | 4 | 4 | 5 | 4 |
| E-Modul MD | N/mm2 | 4200 | 4360 | 3950 | | 4100 | 4200 | 4200 | 4360 | 4390 |
| E-Modul TD | N/mm2 | 4750 | 4800 | 4280 | | 4600 | 4750 | 4750 | 4800 | 4680 |
| F5 MD | N/mm2 | 105 | 107 | 101 | | 106 | 105 | 105 | 107 | 108 |
| F5 TD | N/mm2 | 114 | 116 | 103 | | 113 | 114 | 114 | 116 | 112 |
| Schrumpf MD | in % | 1,4 | 1,3 | 1,4 | | 1,6 | 1,4 | 1,4 | 1,3 | 1,3 |
| Schrumpf TD | in % | 0,2 | 0,3 | 0,4 | | 0,3 | 0,2 | 0,2 | 0,3 | 0,1 |
| Ausdehnung MD bei 100 °C | in % | 0 | 0,1 | 0 | | -0,1 | 0 | 0 | 0 | 0,1 |
| Ausdehnung TD bei 100 °C | in % | 0,1 | 0 | 0 | | 0 | 0,1 | 0,1 | 0 | 0 |
| SV-Folie | | 738 | 745 | 740 | | 750 | 743 | 740 | 741 | 745 |

| | | | | | | | | | | |
|---|---|---|---|---|---|---|---|---|---|---|
| Transparenz Minimum zwischen 390 und 400 nm | | 81 | 85 | 85 | | 81 | 85 | 77 | 85 | 79 |
| Transparenz Maximum zwischen 300 und 370 nm | | 11 | 13 | 13 | | 11 | 13 | 8 | 13 | 9 |
| Bemerkung | | | | | | | | | | |

## Patentansprüche

**1.** Ein- oder mehrschichtige Polyesterfolie, wobei:

- die Folie mindestens einseitig mit einer Antireflexbeschichtung ausgestattet ist,
- die der mit Antireflexbeschichtung versehenen Seite gegenüberliegende Folienseite ebenfalls eine Antireflexbeschichtung aufweist, oder mit einer Antireflexdeckschicht versehen ist, die einen niedrigeren Brechungsindex aufweist als der Brechungsindex der Folie ohne Antireflexdeckschicht,
- die Folie (ohne Berücksichtigung der Beschichtung) in allen Schichten einen UV-Stabilisator enthält, und
- die Folie eine Transparenz von mindestens 93,5 % aufweist,

wobei die Dicke der Beschichtung/en jeweils mindestens 60 nm und maximal 130 nm beträgt.

**2.** Polyesterfolie nach Anspruch 1, **dadurch gekennzeichnet, dass** Gesamtfoliendicke mindestens 10 µm und maximal 40 µm beträgt.

**3.** Polyesterfolie nach Anspruch 1 oder 2, **dadurch gekennzeichnet, dass** Folie eine Transmission im Wellenlängenbereich von unterhalb 370 nm bis 300 nm von kleiner 40 % aufweist.

**4.** Polyesterfolie nach Anspruche 1, 2 oder 3, **dadurch gekennzeichnet, dass** die Folie, bzw. im Fall einer Mehrschichtfolie mindestens eine Deckschicht, bevorzugt beide Deckschichten einen organischen UV-Stabilisator enthalten, wobei der organische UV-Stabilisator bevorzugt ausgewählt ist aus einer oder mehreren Verbindungen aus der Gruppe der Triazine, Benzotriazole und Benzoxazinone und besonders bevorzugt 2-(4,6-Diphenyl-1,3,5-triazin-2-yl)-5-(hexyl)oxy-phenol (Tinuvin® 1577) und/oder 2-(2'-hydroxyphenyl)-4,6- bis(4-phenylphenyl) Triazine, (Tinuvin 1600™) ist.

**5.** Polyesterfolie nach einem der Ansprüche 1 bis 4, **dadurch gekennzeichnet, dass** der UV-Stabilisator in der/den Deckschicht/en bzw. der Monofolie in Mengen zwischen 0,3 und 3 Gew.-%, bezogen auf das Gewicht der jeweiligen Schicht vorhanden ist.

**6.** Polyesterfolie nach einem der Ansprüche 1 bis 5, **dadurch gekennzeichnet, dass** die Folie weniger als 0,1 Gew.% (bezogen auf das Gewicht der Folie) an mit Polyester inkompatiblen Polymeren enthält.

**7.** Polyesterfolie nach einem der Ansprüche 1 bis 6, **dadurch gekennzeichnet, dass** die Folie ein Flammschutzmittel auf Basis von phosphororganischen Verbindungen enthält, die bevorzugt ein Ester der Phosphorsäure oder Phosphonsäure ist, besonders bevorzugt 6-Oxo-dibenzo-[c,e]-[1,2]-oxaphosphorin-6-ylmethyl-bernsteinsäure-bis(2-hydroxyethyl)-ester (CAS-Nr. 63562-34-5).

**8.** Polyesterfolie nach Anspruch 7, **dadurch gekennzeichnet, dass** die Menge an Flammschutzmittel so eingestellt wird, dass der Anteil an Phosphor in der Folie bei mindestens 500 ppm liegt.

**9.** Polyesterfolie nach Anspruch 7 oder 8, **dadurch gekennzeichnet, dass** die Deckschichten der Folie mindestens 75 % der Phosphorkonzentration der inneren Schicht(en) enthalten.

**10.** Polyesterfolie nach einem der Ansprüche 1 bis 9, **dadurch gekennzeichnet, dass** der Brechungsindex des Antireflexbeschichtungsmaterials der Antireflexbeschichtung bei einer Wellenlänge von 589 nm in Maschinenrichtung unterhalb von 1,64 liegt.

**11.** Polyesterfolie nach einem der Ansprüche 1 bis 10, **dadurch gekennzeichnet, dass** die Antireflexbeschichtung Polyacrylate und/oder Silikone und/oder Polyurethane und/oder Polyvinylacetat, bevorzugt Copolymere aus Acrylat und Silikon enthält, und dass besonders bevorzugt die Dicke der Antireflexbeschichtung (pro Beschichtung) mindestens 60 nm und maximal 130 nm beträgt.

**12.** Polyesterfolie nach einem der Ansprüche 1 bis 11, **dadurch gekennzeichnet, dass** sich auf der der mit der Antireflexbeschichtung versehenen Seite gegenüberliegenden Seite der Folie eine weitere durch Co-Extrusion aufgebrachte Antireflexdeckschicht befindet, die einen niedrigeren Brechungsindex aufweist als der Brechungsindex der Folie ohne Antireflexdeckschicht, wobei der Brechungsindex kleiner als 1,70 ist, bei einer Wellenlänge von 589 nm in Maschinenrichtung.

**13.** Verfahren zur Herstellung einer Polyesterfolie nach Anspruch 1, wobei zunächst der Polyester bzw. die Polyestermischung der Schicht oder der einzelnen Schichten in einem oder mehreren Extrudern komprimiert und verflüssigt wird/werden, die Schmelze/Schmelzen in einer Ein- oder Mehrschichtdüse zu einem flachen Schmelzefilm ausgeformt werden, der dann auf einer Kühlwalze und einer oder mehreren Abzugswalzen als Vorfolie abgezogen wird, wobei diese abkühlt und sich verfestigt und anschließend biaxial orientiert wird, **dadurch gekennzeichnet, dass** die Folie mindestens einseitig mit einer Antireflexbeschichtung ausgestattet ist, die der mit Antireflexbeschichtung versehenen Seite gegenüberliegende Folienseite ebenfalls eine Antireflexbeschichtung aufweist, oder mit einer Antireflexdeckschicht versehen ist, die einen niedrigeren Brechungsindex aufweist als der Brechungsindex der Folie ohne Antireflexdeckschicht und die Folie (ohne Berücksichtigung der Beschichtung) in allen Schichten einen UV-Stabilisator enthält.

**14.** Verwendung einer Folie nach einem der Ansprüche 1 bis 12 als Antireflexfolie, zur Herstellung von Schattenmatten.

**15.** Verwendung einer Folie nach einem der Ansprüche 1 bis 12 in Gewächshäusern.

## Claims

**1.** Single- or multilayer polyester film, where:

- the film has an antireflective coating at least on one side,
- that side of the film that is opposite to the side having an antireflective coating likewise has an antireflective coating or has an antireflective outer layer, with a lower refractive index than the refractive index of the film without antireflective outer layer,
- the film (ignoring the coating) comprises a UV stabilizer in all layers, and
- the transparency of the film is at least 93.5 %, where the thickness of the coating (s) is in each case at least 60 nm and at most 130 nm.

**2.** Polyester film according to Claim 1, **characterized in that** the total thickness of the film is at least 10 $\mu$m and at most 40 $\mu$m.

**3.** Polyester film according to Claim 1 or 2, **characterized in that** the transmittance of the film in the wavelength range from below 370 nm to 300 nm is less than 40 %.

**4.** Polyester film according to Claim 1, 2 or 3, **characterized in that** the film, or in the case of a multilayer film at least one outer layer, preferably both outer layers, comprise (s) an organic UV stabilizer, where the organic UV stabilizer is preferably selected from one or more compounds from the group of the triazines, benzotriazoles and benzoxazinones and particularly preferably is 2-(4,6-diphenyl-1,3,5-triazin-2-yl)-5-(hexyl)oxyphenol (Tinuvin® 1577) and/or 2-(2'-hydroxyphenyl)-4,6-bis(4-phenylphenyl)triazines (Tinuvin 1600™).

**5.** Polyester film according to any of Claims 1 to 4, **characterized in that** quantities of the UV stabilizer present in the outer layer(s) or in the monofilm are from 0.3 to 3 % by weight, based on the weight of the respective layer.

**6.** Polyester film according to any of Claims 1 to 5, **characterized in that** the film comprises less than 0.1 % by weight (based on the weight of the film) of polymers incompatible with polyester.

**7.** Polyester film according to any of Claims 1 to 6, **characterized in that** the film comprises a flame retardant based on organophosphorus compounds which is preferably an ester of phosphoric acid or phosphonic acid, particularly preferably bis(2-hydroxyethyl) 6-oxodibenzo[c,e][1,2] oxaphosphorin-6-ylmethylsuccinate (CAS No. 63562-34-5).

**8.** Polyester film according to Claim 7, **characterized in that** the quantity of flame retardant is adjusted in such a way that the phosphorus content in the film is at least 500 ppm.

**9.** Polyester film according to Claim 7 or 8, **characterized in that** the outer layers of the film comprise at least 75 % of the phosphorus concentration of the interior layer(s).

**10.** Polyester film according to any of Claims 1 to 9, **characterized in that** the refractive index of the antireflective coating material of the antireflective coating at a wavelength of 589 nm in machine direction is below 1.64.

**11.** Polyester film according to any of Claims 1 to 10, **characterized in that** the antireflective coating comprises polyacrylates and/or silicones and/or polyurethanes and/or polyvinyl acetate, preferably copolymers of acrylate and silicone, and **in that** the thickness of the antireflective coating (per coating) is particularly preferably at least 60 nm and at most 130 nm.

**12.** Polyester film according to any of Claims 1 to 11, **characterized in that** on that side of the film that is opposite to the side having the antireflective coating there is a further antireflective outer layer applied by coextrusion which has a lower refractive index than the refractive index of the film without antireflective outer layer, where the refractive index is below 1.70 at a wavelength of 589 nm in machine direction.

**13.** Process for the production of a polyester film according to Claim 1, where the polyester or the polyester mixture of the layer or of the individual layers is/are first compressed and liquefied in one or more extruders, the melt/melts is/are shaped in a mono- or coextrusion die to give a flat melt film which is then drawn off on a chill roll and one or more take-off rolls in the form of prefilm, where this cools and hardens and then is biaxially oriented, **characterized in that** the film has an antireflective coating at least on one side, that side of the film that is opposite to the side having an antireflective coating likewise has an antireflective coating or has an antireflective outer layer, with a lower refractive index than the refractive index of the film without antireflective outer layer, the film (ignoring the coating) comprises a UV stabilizer in all layers.

**14.** Use of a film according to any of Claims 1 to 12 as antireflective film for the production of blinds.

**15.** Use of a film according to any of Claims 1 to 12 in greenhouses.

## Revendications

**1.** Film polyester simple ou multicouche, dans lequel :

- le film est muni d'un revêtement antireflet sur au moins une face,
- la face de film opposée à la face munie d'un revêtement antireflet présente également un revêtement antireflet, ou est munie d'une couche extérieure antireflet qui présente un indice de réfraction inférieur à l'indice de réfraction du film sans couche extérieure antireflet,
- le film (sans prendre en compte le revêtement) contient un agent anti-UV dans toutes les couches, et
- le film présente une transparence d'au moins 93,5 %,

l'épaisseur du ou des revêtement(s) étant comprise entre respectivement au moins 60 nm et au plus 130 nm.

**2.** Film polyester selon la revendication 1, **caractérisé en ce que** l'épaisseur totale de film est comprise entre au moins 10 μm et au plus 40 μm.

**3.** Film polyester selon la revendication 1 ou 2, **caractérisé en ce que** le film présente une transmission inférieure à 40 % dans la plage de longueurs d'onde comprise entre 300 nm et moins de 370 nm.

**4.** Film polyester selon la revendication 1, 2 ou 3, **caractérisé en ce que** le film, ou bien dans le cas d'un film multicouche au moins une couche extérieure, de manière préférée deux couches extérieures, contient un agent anti-UV organique, dans lequel l'agent anti-UV organique est de manière préférée choisi parmi un ou plusieurs composé(s) du groupe des triazines, des benzotriazoles et des benzoxazinones et est de manière particulièrement préférée du 2-(4,6-diphényl-1,3,5-triazin-2-yl)-5-(hexyl)oxy-phénol (Tinuvin® 1577) et/ou de la 2-(2'-hydroxyphényl)-4,6-bis(4-phénylphényl)triazine, (Tinuvin 1600™).

**5.** Film polyester selon l'une quelconque des revendications 1 à 4, **caractérisé en ce que** l'agent anti-UV est présent dans la/les couche(s) extérieure(s) ou le monofilm en des quantités comprises entre 0,3 et 3 % en poids par rapport au poids de la couche respective.

**6.** Film polyester selon l'une quelconque des revendications 1 à 5, **caractérisé en ce que** le film contient moins de 0,1 % en poids (par rapport au poids du film) de polymères incompatibles avec le polyester.

**7.** Film polyester selon l'une quelconque des revendications 1 à 6, **caractérisé en ce que** le film contient un agent

ignifuge à base de composés organophosphorés, qui est de manière préférée un ester d'acide phosphorique ou d'acide phosphonique, de manière particulièrement préférée le bis(2-hydroxyéthyl)-ester d'acide 6-oxo-dibenzo-[c,e] -[1,2-oxaphosphorin-6-ylméthylsuccinique (numéro CAS°63562-34-5).

8. Film polyester selon la revendication 7, **caractérisé en ce que** la quantité d'agent ignifuge est ajustée de sorte que la proportion de phosphore dans le film est d'au moins 500 ppm.

9. Film polyester selon la revendication 7 ou 8, **caractérisé en ce que** les couches extérieures du film contiennent au moins 75 % de la concentration en phosphore de la ou des couche(s) intérieure(s).

10. Film polyester selon l'une quelconque des revendications 1 à 9, **caractérisé en ce que** l'indice de réfraction du matériau de revêtement antireflet du revêtement antireflet est inférieur à 1,64 pour une longueur d'onde de 589 nm dans le sens de défilement.

11. Film polyester selon l'une quelconque des revendications 1 à 10, **caractérisé en ce que** le revêtement antireflet contient des polyacrylates et/ou des silicones et/ou des polyuréthannes et/ou du polyacétate de vinyle, de manière préférée des copolymères d'acrylate et de silicone, et **en ce que** l'épaisseur du revêtement antireflet (par revêtement) est de manière particulièrement préférée comprise entre au moins 60 nm et au plus 130 nm.

12. Film polyester selon l'une quelconque des revendications 1 à 11, **caractérisé en ce qu'**une autre couche extérieure appliquée par coextrusion se trouve sur la face du film opposée à la face munie du revêtement antireflet, ladite couche extérieure présentant un indice de réfraction inférieur à l'indice de réfraction du film sans couche extérieure antireflet, dans lequel l'indice de réfraction est inférieur à 1,70 pour une longueur d'onde de 589 nm dans le sens de défilement.

13. Procédé de production d'un film polyester selon la revendication 1, dans lequel le polyester ou le mélange polyester de la couche ou des couches individuelles est d'abord comprimé et liquéfié dans une ou plusieurs extrudeuse(s), la ou les masse(s) fondue(s) est ou sont formée(s) dans une filière monocouche ou multicouche pour donner un film en fusion plat qui est ensuite extrait sous forme de pré-film sur un rouleau refroidisseur et sur un ou plusieurs rouleau(x) d'extraction, dans lequel ledit film refroidit et se solidifie et est ensuite orienté de manière biaxiale, **caractérisé en ce que** le film est pourvu sur au moins une face d'un revêtement antireflet, **en ce que** la face de film opposée à la face munie d'un revêtement antireflet présente également un revêtement antireflet ou est munie d'une couche extérieure antireflet qui présente un indice de réfraction inférieur à celui du film sans couche extérieure antireflet, et **en ce que** le film (sans prendre en compte le revêtement) contient un agent anti-UV dans toutes les couches.

14. Utilisation d'un film selon l'une quelconque des revendications 1 à 12 comme film antireflet pour la production de voiles d'ombrage.

15. Utilisation d'un film selon l'une quelconque des revendications 1 à 12 dans des serres.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 2060392 A1
- DE 10043785 A1
- DE 2346787 A
- EP 0144948 A
- EP 0769540 A
- DE 69731750
- WO 9806575 A


### In der Beschreibung aufgeführte Nicht-Patentliteratur


- **J. A. WOOLLAM et al.** Overview of variable-angle spectroscopic ellipsometry (VASE): I. Basic theory and typical applications. *Proc. SPIE,* vol. CR72, 3-28
- Optical Metrology